# EUROPÄISCHE PATENTSCHRIFT

(11) **EP 3 604 874 B1**
(45) Veröffentlichungstag und Bekanntmachung des Hinweises auf die Patenterteilung: **17.02.2021**
(21) Anmeldenummer: 19188254.7
(22) Anmeldetag: 25.07.2019
(51) Int. Cl.: F16K 7/12, F16K 37/00

(54) **MEMBRAN MIT ELEKTRONIKBAUTEIL**
MEMBRANE WITH ELECTRONIC COMPONENT
MEMBRANE À COMPOSANT ÉLECTRONIQUE

(30) Priorität: 03.08.2018 DE 102018213005
(43) Veröffentlichungstag der Anmeldung: 05.02.2020
(73) Patentinhaber: SISTO Armaturen S.A., 6468 Echternach (LU)
(72) Erfinder: Graf, Hans, 67227 Frankenthal (DE)
(74) Vertreter: Busch, Tobias

(56) Entgegenhaltungen:
- US-A1- 2018 142 806

## Beschreibung

Die Erfindung betrifft ein Verfahren und eine Einheit zur Diagnose von Membranen in Ventilen oder Pumpen.

Die Überwachung oder Diagnose von Membranen in Ventilen und Pumpen ist insbesondere in kritischen Bereichen der sterilen Verfahrenstechnik ein deutlicher Schwerpunkt, dem im Wesentlichen durch vorsorgende Maßnahmen begegnet wird, da fortlaufend gemessene Zustandsgrößen weitestgehend nicht verfügbar sind. Messungen während des laufenden Betriebes sind teilweise nur schwer möglich. Anlagen müssen oft in allen Details steril reinigbar aufgebaut sein, weshalb übliche elektrische Stecker Anordnungen ungünstig sind. Eine Möglichkeit der Erfassung von Zustandsgrößen ist die Integration von Messgeräten in die Membran. Nach Ihrem Einsatz besteht die verbrauchte Membran hauptsächlich aus Elastomer, wobei durch genannte Integration von Messgeräten mindestens ein Elektronikbauteil vorenthalten ist.

In der DE 10 2013 214 304 A1 wird ein Verfahren und eine Vorrichtung zum Auslesen und Sammeln von Daten aus einer Membran beschrieben.

Die EP 2 242 004 A1 zeigt ein Bauteil aus elastomerem Werkstoff in das ein Datenträger eingebettet ist.

Die WO2012035291 beschreibt ein Verfahren und eine Vorrichtung zur Diagnose eines Membranventils.

Die DE 10 2015 210 208 A1 beschreibt die Ermittlung von Zustandsgrößen bei Ventilmembranen.

Die US 2018/142806 A1 offenbart eine Membran gemäß dem Oberbegriff von Anspruch 1.

Aufgabe der Erfindung ist es, eine Membran für Ventile und/oder Pumpen zu schaffen, bei der mindestens ein Datenspeicher vorgesehen ist, wobei der Datenspeicher direkt vor der Nutzung der Membran in diese integrierbar gemacht werden soll. Anforderungen bezüglich der Reinigbarkeit und der Hygiene sollen hoch sein. Weiter soll die Membran einfach und kostengünstig herstellbar sein und einzelne Komponenten sollen eventuell nach Gebrauch wiederverwertbar sein.

Diese Aufgabe wird erfindungsgemäß durch eine Vorrichtung mit den Merkmalen des Anspruchs 1 gelöst. Dabei wird die Membran eines Membranventils oder einer Membranpumpe umfassend ein erstes Bauteil, bestehend aus einer in einem Gehäuse vorgesehenen mehrlagigen Membran, die bedarfsweise mit einer Verstärkung versehen ist. Ein Teil der Membran ragt aus dem Gehäuse heraus und wird Lappen genannt, wobei dieser Teil lediglich von einer Lage der Membran gebildet wird. Die geometrische Form dieses Lappens ist derart ausgestaltet, dass ein zweites Bauteil, bestehend aus einem Datenspeicher, durch Verformung der Membran formschlüssig in diese integrierbar ist. Dabei kann das zweite Bauteil in verschiedenen Lagen integriert werden. Abhängig von der Einbaulage des Ventils oder der Pumpe kann es vorteilhaft sein, den Datenspeicher eher waagerecht oder senkrecht einzubauen.

Dies hat den Vorteil, dass eine einfache Herstellung einer Membran mit einem Datenspeicher möglich ist, wobei der Datenspeicher individuell vor der Nutzung in die Membran integrierbar ist. Je nach Anwendungsgebiet fallen bei den Nutzern deutliche Mengen benötigter Membranen an. Diese sind erfindungsgemäß jeweils aus ihren einzelnen Bestandteilen herzustellen. Der Nutzer kann seinen eigenen Datenspeicher mit einer eventuell notwendigen Übertragungsvorrichtung für Daten zum Einsatz bringen. Nach Gebrauch der Membran kann dieser Datenspeicher eventuell zur Wiederverwendung aus der Membran entnommen werden. Wesentlich wird es hierfür sein, die mechanischen von den elektronischen Komponenten zu trennen. Mechanisch bedeutet in diesem Fall also das reine Membranmaterial, das meist aus einem Elastomer besteht, der eventuell durch eine beliebige Armierung verstärkt ausgeführt ist. Als elektronische Komponenten, hier Datenspeicher genannt, sind auch sämtliche weiteren elektronischen Bauteile zu verstehen. Hierzu zählen einfache Kontaktierungen, Sensoren, Datenspeicher oder komplexere Bauteile, beispielsweise zur Datenanalyse und/oder Datenübertragung.

In einer Ausgestaltung der Erfindung ist in einer Lage der Membran eine Ausnehmung vorgesehen, in der der Datenspeicher angeordnet ist, wobei die Ausnehmung gerade so groß sein sollte, dass sie den Datenspeicher aufnehmen kann. Von Vorteil ist dabei, dass bei der Herstellung der Membran, die eventuell aus mehreren Lagen bestehen kann, nur eine Lage mit einem zusätzlichen Arbeitsschritt für die Aufnahme des Datenspeichers oder eines anderen Elements, wie zum Beispiel einer elektronischen Komponente, bearbeitet werden muss. Diese Ausnehmung kann im Herstellprozess der Membran direkt mit dem Datenspeicher bestückt werden, so dass eine einsatzbereite Membran hergestellt wird, alternativ kann eine Membran mit einer Ausnehmung hergestellt werden, in die der Nutzer der Membran vor ihrer Nutzung eine entsprechende Komponente einsetzen kann. Oder der Nutzer stellt die Ausnehmung individuell nach seinen Anforderungen an der vorgefertigten erfindungsgemäßen Membran selbst her. Ob ein Elastomer, beispielsweise Gummi also mit integriertem Datenspeicher vulkanisiert wird, oder ob die Membran fertig vulkanisiert ist, der Datenspeicher eingelegt wird und die eine Lage des Membranmaterials um den Datenspeicher verklebt wird, ist für die Erfindung gleichrangig.

In einer weiteren Ausgestaltung verfügt der Lappen über mindestens eine Kerbe. Dies hat den Vorteil, dass das Umschlagen des Lappens um den Datenspeicher entlang der Kerben eine einfache, sichere und eindeutige Form vorgibt. Weiter ist es vorteilhaft den Totraum, der bei der Verformung des Lappens entstehen könnte auf ein Minimum zu reduzieren. Dies kann weiter verbessert werden, indem die Flächen des Lappens, die nach der Umformung in direktem Kontakt stehen mit einer Verzahnung versehen sind, wodurch die Form weitern in eine eindeutige Richtung geschoben wird.

Wichtig ist bei der Herstellung der Membran darauf zu achten, dass die Einbettung des Datenspeichers in die Membran durch eine innige Verbindung erfolgt, insbesondere ist das Eindringen von Fremdstoffen in die Membran zu verhindern. In eventuellen Toträumen können Ablagerungen entstehen, die bei der Nutzung der Membran nachteilig sein können. Dies kann durch eine geeignete Wahl eines Verbindungsmittels erreicht werden. beispielsweise füllt ein Kleber den Raum zwischen den kontaktierenden Flächen der Membranlage. Es ist aber auch möglich durch einen entsprechenden Prozess eine Vernetzung der elastomeren Kontaktflächen herzustellen, beispielsweise durch einen Vulkanisationsprozess.

In einer weiteren Ausgestaltung ist bei der Membranlage im Bereich des Datenspeichers mindestens eine Sollbruchstelle vorgesehen. Dies vereinfacht die Trennung von Elastomer und Elektronikkomponenten nach der Nutzung der Membran.

Die Erfindung umfasst weiter einen Datenspeicher zur Verwendung mit einer vorbeschriebenen Membran, wobei der Datenspeicher in einem hermetischen, glatten Gehäuse angeordnet ist. Dies ermöglicht eine passgenaue Einbettung des Datenspeichers in die Membran. Ist der Datenspeicher zudem in einem Gehäuse aus elastomerem Material eingebettet, so ist es möglich, eine einstückige Verbindung zwischen der Membranlage und dem Gehäuse herzustellen, insbesondere durch Vernetzung der elastomeren Materialien. Dies kann die Bildung von Toträumen weiter reduzieren.

Die Anordnung des Datenspeichers und insbesondere seiner Teilkomponenten kann auf unterschiedliche Weise in dem Lappen vorgenommen werden, wobei darauf geachtet werden kann, dass eine elektromagnetische Verbindung zu einer Empfangseinheit in vorteilhafter Weise ausgebildet ist. Beispielsweise kann eine Antennenkomponente der Sendeeinheit direkt in der äußersten Spitze des Lappens angeordnet sein, sodass eine besonders gute Funk-Verbindung herstellbar ist.

Weiter ist es die Aufgaben der Erfindung eine Membran nach der vorbeschriebenen Art herzustellen, wobei in einem ersten Schritt der Datenspeicher oder ein anderes elektronisches oder elektrotechnisches Bauteil in die Lage des elastomeren Materials eingebettet wird, wobei der Datenspeicher vollständig von der einen Lage des elastomeren Materials umschlossen wird, in einem zweiten Schritt die Membran regulär in einem Membranventil oder einer Membranpumpe mit einem Datenspeicher benutzt wird, in einem dritten Schritt verbrauchte Membran aus dem Membranventil oder der Membranpumpe entfernt wird und in einem vierten Schritt der Datenspeicher entfernt wird. Von Vorteil ist dabei, dass die einzelnen Komponenten der Membran auf einfache und kostengünstige Weise der Wiederverwertung zugeführt werden können. Insbesondere die Trennung von Elektronik und Elastomer gestaltet sich schwierig, wenn der Verbund derart gestaltet ist, dass die Elektronik im Elastomer eingebettet ist. Häufig lässt sich eine Trennung nur nach thermischer Zerstörung des Elastomers durchführen.

Weitere Vorteile ergeben sich, wenn im vorgestellten erfindungsgemäßen Verfahren Sollbruchstellen im Elastomer derart vorgesehen sind, dass der Datenspeicher werkzeuglos aus dem Elastomer entfernt werden kann.

Weitere Merkmale und Vorteile der Erfindung ergeben sich aus der Beschreibung von Ausführungsbeispielen anhand von Zeichnungen und aus den Zeichnungen selbst.

Dabei zeigt:
Figur 1 eine erfindungsgemäße Membran mit Datenspeicher und die
Figur 2 ein Verfahren zur Herstellung einer erfindungsgemäßen Membran.

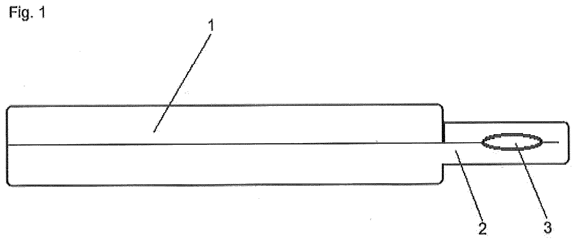

Figur 1 zeigt eine Membran 1, wie sie beispielsweise in einem Membranventil zur Anwendung kommt. Die Membran 1 ist beispielsweise aus mehreren Lagen elastomeren Materials aufgebaut, das bedarfsweise mit einer Verstärkung, beispielsweise einem Gewebe versehen sein kann. Diese Membran verfügt über einen sogenannten Lappen 2, der auch als Lasche oder Fahne bezeichnet wird. Ist die Membran in einem Ventil- oder Pumpengehäuse montiert, so ragt dieser Lappen 2 aus dem Gehäuse heraus. Die Membran kann zusätzlich über eine spezielle Form verfügen, die durch eine Kammerung für zusätzliche Vorteile sorgt. Diese Ausgestaltung ist in der Figur nicht dargestellt

Die Membran 1 wird in einem Ventil- oder Pumpengehäuse befestigt und durch einen Aktor bewegt, wodurch sich beispielsweise ein Ventil öffnen oder schließen oder die Pumpwirkung erzielen lässt.

Erfindungsgemäß ist der Lappen aus einer Lage elastomeren Materials ausgestaltet. Die weiteren Lagen der Membran ragen nicht in den Bereich des Lappens 2 vor. In dem Lappen 2 befindet sich erfindungsgemäß ein Datenspeicher 5. Dieser Datenspeicher 5 kann beispielsweise als rein passives Element ausgestaltet sein und eine Identitätskennzeichnung der Membran 1 enthalten. Durch eine eindeutige Nummer kann die Historie und Verwendung der Membran beispielsweise aus den Daten einer entsprechenden Datenbank entnommen werden. Er kann aber auch mit einer Datenerfassungsvorrichtung, beispielsweise einem Sensor verbunden sein, für den er die erfassten Daten speichert. Weiter kann bei dem Datenspeicher eine Sende- und Empfangsvorrichtung zur Übertragen von Daten vorgesehen sein.

Der Datenspeicher 5 kann entweder durch direkten Kontakt mit einem Auslesegerät ausgelesen werden oder aber es findet eine kontaktlose Datenauslesung statt, beispielsweise über eine RFID Technik oder vergleichbares. Der Datenspeicher 5 kann über eine eigene Energieversorgung verfügen, oder aber durch das Auslesegerät versorgt werden.

Wesentlich bei der erfindungsgemäßen Anordnung des Datenspeichers 5 in dem Lappen 2 ist die vollständige Einbettung in der einen Lage der Membran, die es ermöglicht, dass der Datenspeicher 5 mit einfachen Mitteln vor Nutzung der Membran 1 in diese eingesetzt werden kann. Weiter kann es ermöglicht werden, den Datenspeicher 5 werkzeuglos aus dem Lappen 2 zu entfernen.

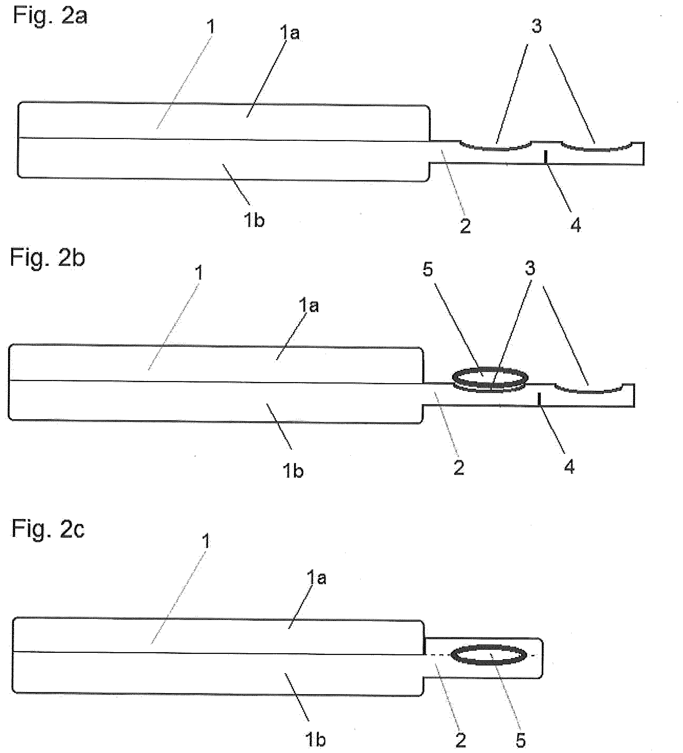

Die Fig. 2 zeigt den Herstellungsprozess einer erfindungsgemäßen Membran beispielhaft am Umschlagen einer einzelnen Schicht von elastomerem Material. In Fig. 2a ist die eine Membran 1 aus mehreren Elastomerlagen 1a und 1b unbearbeitetem Zustand gezeigt. Das Rohmaterial wird später eine Membran 1 und einen Lappen 2 ausbilden. Die Anordnung verfügt über zwei Ausnehmungen 3.

In Fig. 2b wird in eine der Ausnehmungen 3 im Bereich des Lappens 2 ein Datenspeicher 5 eingelegt. Die weitere Ausnehmung 3 stellt den benötigten Raum für den eingelegten Datenspeicher 5 im fertigen Zustand zur Verfügung. Die Flächen, die später in Kontakt kommen werden, also in der Fig. 2b die nach oben gerichteten, werden mit einem Verbindungsmittel, insbesondere mit einem für die Verbindung des elastomeren Membranmaterials geeigneten Mittel, versehen. Anschließend wird der Bereich mit der weiteren Ausnehmung 3 an der Kerbe 4 derart umgeschlagen, dass er mit dem eingelegten Datenspeicher in Deckung kommt. Dabei kann im Bereich gegenüber der Kerbe 4 eine Antenne vorgesehen sein, wobei diese horizontal oder vertikal ausgerichtet sein kann. Der umgeschlagene Lappen 2 wird bis zur vollständigen Wirkung des Verbindungsmittels durch nicht dargestellte mechanische Haltemittel verpresst. Sobald der Kleber fest ist, können diese Haltemittel entfernt werden.

In Fig. 2c ist die fertige erfindungsgemäße Membran dargestellt. Der Teil des Lappens 2, der den Datenspeicher 3 festhält wurde durch Umklappen so mit dem übrigen Lappen verbunden, dass der Datenspeicher 3 sicher von der einen Lage der Membran 1 umschlossen ist.

Je nach Anwendung ist es notwendig, den Lappen 2 besonders innig mit dem Datenspeicher 5 zu verbinden. Eventuelle Anwendungen in der Steriltechnik erfordern quasi totraumfreie Membranen. Hier wäre also darauf zu achten, dass es während der regulären Nutzung der Membran 1 nicht möglich ist, zwischen dem Lappen 2 und dem Datenspeicher 5 Hohlräume auszubilden. Eine verbesserte Abdichtung der Klebestelle kann beispielsweise durch eine Verzahnung der Kontaktflächen erreicht werden, die in der Fig. 2 nicht dargestellt ist.

Zur einfacheren Trennung von Elastomer und Datenspeicher nach der Nutzung der Membran kann es vorteilhaft sein, den Datenspeicher selbst nicht mit Kleber zu versehen, sondern nur die umschließende Membranlage.

**Bezugszeichenliste:**

| | | | |
|---|---|---|---|
| 1 | Membran | 3 | Ausnehmung |
| 1a, 1b | Membranlage | 4 | Kerbe |
| 2 | Lappen | 5 | Datenspeicher |

## Patentansprüche

1. Membran (1) für eine Membranventil oder für eine Membranpumpe, wobei das Membranventil oder die Membranpumpe ein Gehäuse mit der darin vorgesehene Membran (1) aufweist, die Membran (1) umfassend ein erstes Bauteil, bestehend aus mehreren Membranlagen (1a, 1b), wobei im Gebrauch ein Teil der Membran (1) als Lappen (2) aus dem Gehäuse herausragt, und ein zweites Bauteil, bestehend aus einem Datenspeicher (5)
**dadurch gekennzeichnet, dass**
der Lappen (2) bestehend aus einer Membranlage (1b) derart geometrisch ausgestaltet ist, dass er durch einfaches Umformen den Datenspeicher (5) vollständig umschließt.

2. Membran (1) nach Anspruch 1, **dadurch gekennzeichnet, dass** in einer Lage der Membran (1b) mindestens eine Ausnehmung (3) vorgesehen ist, in der der Datenspeicher (5) angeordnet ist.

3. Membran (1) nach Anspruch 1 oder 2, **dadurch gekennzeichnet, dass** der Lappen (2) über mindestens eine Kerbe (4) verfügt.

4. Membran (1) nach einen der Ansprüche 1 bis 3, **dadurch gekennzeichnet, dass** die Einbettung des Datenspeichers (5) in die Membran (1) durch eine innige Verbindung hergestellt ist, insbesondere durch eine das Eindringen von Fremdstoffen verhindernde.

5. Membran (1) nach einem der Ansprüche 1 bis 4, **dadurch gekennzeichnet, dass** der Teil der Membran (1), der im Gebrauch aus dem Gehäuse herausragt aus einer einzelnen Lage elastomeren Materials (1b) besteht, wobei der Datenspeicher (5) in der Lage eingebettet ist.

6. Membran (1) nach Anspruch 5, **dadurch gekennzeichnet, dass** die einzelne Lage des elastomeren Materials (1b) um den Datenspeicher (5) herumgeschlagen ist.

7. Membran (1) nach Anspruch 5 oder 6, **dadurch gekennzeichnet, dass** in der einzelnen Lage des elastomeren Materials (1b) im Bereich um den Datenspeicher (5) herum mindestens eine Sollbruchstelle vorgesehen ist.

8. Membran (1) nach einem der Ansprüche 1 bis 7, **dadurch gekennzeichnet, dass** aufeinanderliegende Bereiche der umschlingenden Membranlage (1b) durch ein Verbindungsmittel verbunden sind, insbesondere durch Kleber und/oder Vulkanisationsmittel.

9. Verfahren zur Herstellung und Nutzung einer Membran (1) nach einem der vorherigen Ansprüche, **dadurch gekennzeichnet, dass** in einem ersten Schritt der Datenspeicher (5) in die Lage des elastomeren Materials (1b) eingebettet wird, wobei der Datenspeicher (5) vollständig von der einen Lage des elastomeren Materials umschlungen wird, in einem zweiten Schritt die Membran (1) regulär in einem Membranventil oder einer Membranpumpe mit einem Datenspeicher (5) benutzt wird, in einem dritten Schritt die verbrauchte Membran (1) aus dem Membranventil oder der Membranpumpe entfernt wird und in einem vierten Schritt der Datenspeicher (5) aus der Membranlage (1b) entfernt wird.

10. Verfahren nach Anspruch 9, **dadurch gekennzeichnet, dass** zum Entfernen vorbereitend die umschließende Lage elastomeren Materials (1b) geöffnet wird, insbesondere entlang von Sollbruchstellen.

## Claims

1. Membrane (1) for a membrane valve or for a membrane pump, wherein the membrane valve or the membrane pump has a housing with the membrane (1) provided therein, the membrane (1) comprising a first component composed of a plurality of membrane layers (1a, 1b), wherein during use part of the membrane (1) projects out of the housing as lobes (2), and a second component composed of a data memory (5)
**characterized in that**
the lobe (2) composed of a membrane layer (1b) is geometrically configured in such a way that it completely encloses the data memory (5) by simple shaping.

2. Membrane (1) according to Claim 1, **characterized in that** at least one recess (3), in which the data memory (5) is arranged, is provided in a layer of the membrane (1b) .

3. Membrane (1) according to Claim 1 or 2, **characterized in that** the lobe (2) has at least one notch (4) .

4. Membrane (1) according to one of Claims 1 to 3, **characterized in that** the embedding of the data memory (5) in the membrane (1) is brought about by means of a close connection, in particular by one which prevents the ingress of foreign substances.

5. Membrane (1) according to one of Claims 1 to 4, **characterized in that** the part of the membrane (1) which during use projects out of the housing is composed of a single layer of elastomer material (1b), wherein the data memory (5) is embedded in the layer.

6. Membrane (1) according to Claim 5, **characterized in that** the individual layer of the elastomer material (1b) is folded around the data memory (5).

7. Membrane (1) according to Claim 5 or 6, **characterized in that** at least one predetermined break point is provided in the individual layer of the elastomer material (1b) in the region around the data memory (5).

8. Membrane (1) according to one of Claims 1 to 7, **characterized in that** areas of the surrounding membrane layer (1b) which rest one on top of the other are connected by a connecting means, in particular by adhesive and/or a vulcanizing agent.

9. Method for manufacturing and using a membrane (1) according to one of the preceding claims, **characterized in that** in a first step the data memory (5) is embedded in the layer of the elastomer material (1b), wherein the data memory (5) is completely surrounded by the one layer of the elastomer material, in a second step the membrane (1) is usually used in a membrane valve or a membrane pump with a data memory (5), in a third step the used membrane (1) is removed from the membrane valve or the membrane pump, and in a fourth step the data memory (5) is removed from the membrane layer (1b).

10. Method according to Claim 9, **characterized in that** for the purpose of removal the surrounding layer of elastomer material (1b) is opened in a preparatory fashion, in particular along predetermined break points.

## Revendications

1. Membrane (1) pour une soupape à membrane ou pour une pompe à membrane, la soupape à membrane ou la pompe à membrane présentant un boîtier dans lequel se trouve la membrane (1), la membrane (1) comprenant un premier composant constitué de plusieurs couches de membrane (1a, 1b), pendant l'utilisation, une partie de la membrane (1) faisant saillie hors du boîtier du boîtier sous forme de languette (2), et un deuxième composant constitué d'une mémoire de données (5),
**caractérisée en ce que**
la languette (2) constituée d'une couche de membrane (1b) est configurée géométriquement de telle sorte qu'elle entoure complètement la mémoire de données (5) par simple déformation.

2. Membrane (1) selon la revendication 1, **caractérisée en ce que** dans une couche de la membrane (1b) est prévu au moins un évidement (3) dans lequel est disposée la mémoire de données (5).

3. Membrane (1) selon la revendication 1 ou 2, **caractérisée en ce que** la languette (2) dispose d'au moins une entaille (4).

4. Membrane (1) selon l'une des revendications 1 à 3, **caractérisée en ce que** l'encastrement de la mémoire de données (5) dans la membrane (1) est réalisé par une liaison intime, en particulier empêchant la pénétration de substances étrangères.

5. Membrane (1) selon l'une quelconque des revendications 1 à 4, **caractérisée en ce que** la partie de la membrane (1) qui, pendant l'utilisation, fait saillie hors du boîtier se compose d'une couche unique en matériau élastomère (1b), la mémoire de données (5) étant incorporée dans la couche.

6. Membrane (1) selon la revendication 5, **caractérisée en ce que** la couche unique en matériau élastomère (1b) est rabattue autour de la mémoire de données (5).

7. Membrane (1) selon la revendication 5 ou 6, **caractérisée en ce que** dans la couche unique en matériau élastomère (1b) est prévue au moins une zone destinée à la rupture dans la région autour de la mémoire de données (5).

8. Membrane (1) selon l'une quelconque des revendications 1 à 7, **caractérisée en ce que** des régions superposées de la couche de membrane enveloppante (1b) sont reliées par un moyen de liaison, en particulier par de l'adhésif et/ou un moyen de vulcanisation.

9. Procédé de fabrication et d'utilisation d'une membrane (1) selon l'une quelconque des revendications précédentes, **caractérisé en ce que** dans une première étape, la mémoire de données (5) est incorporée dans la couche en matériau élastomère (1b), la mémoire de données (5) étant complètement enveloppée par ladite une couche en matériau élastomère, dans une deuxième étape, la membrane (1) est utilisée de manière conforme dans une soupape à membrane ou dans une pompe à membrane avec une mémoire de données (5), dans une troisième étape, la membrane usée (1) est enlevée de la soupape à membrane ou de la pompe à membrane et dans une quatrième étape, la mémoire de données (5) est enlevée de la couche de membrane (1b).

10. Procédé selon la revendication 9, **caractérisé en ce que** préalablement à l'enlèvement, la couche enveloppante de matériau élastomère (1b) est ouverte, en particulier le long de zones destinées à la rupture.
